(19) Europäisches Patentamt
European Patent Office
Office européen des brevets

(11) **EP 4 139 106 B1**

(12) **EUROPÄISCHE PATENTSCHRIFT**

(45) Veröffentlichungstag und Bekanntmachung des Hinweises auf die Patenterteilung:
**24.04.2024   Patentblatt 2024/17**

(21) Anmeldenummer: **21727096.6**

(22) Anmeldetag: **12.05.2021**

(51) Internationale Patentklassifikation (IPC):
**B29B 17/02** (2006.01)    **B07C 5/342** (2006.01)

(52) Gemeinsame Patentklassifikation (CPC):
**B29B 17/02; B07C 5/342;** B29B 2017/0203;
B29B 2017/0279; B29B 2017/0282; Y02W 30/62

(86) Internationale Anmeldenummer:
**PCT/EP2021/062628**

(87) Internationale Veröffentlichungsnummer:
**WO 2021/228940 (18.11.2021 Gazette 2021/46)**

(54) **VERFAHREN UND VORRICHTUNG ZUR SORTIERUNG VON KUNSTSTOFFOBJEKTEN**

METHOD AND DEVICE FOR SORTING PLASTIC OBJECTS

PROCEDE ET DISPOSITIF DE TRI D'OBJETS EN PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2020   DE 102020113252**

(43) Veröffentlichungstag der Anmeldung:
**01.03.2023   Patentblatt 2023/09**

(73) Patentinhaber: **Sensor-Instruments Entwicklungs- und Vertriebs-GmbH 94169 Thurmansbang (DE)**

(72) Erfinder: **BRAUMANDL, Walter 94169 Thurmansbang (DE)**

(74) Vertreter: **Kramer Barske Schmidtchen Patentanwälte PartG mbB European Patent Attorneys Landsberger Strasse 300 80687 München (DE)**

(56) Entgegenhaltungen:
WO-A1-2017/220079    WO-A2-2019/180438
CN-A- 107 703 094    DE-A1- 4 231 477
DE-A1- 19 949 656

**Beschreibung**

Die vorliegende Erfindung bezieht sich auf Verfahren und Vorrichtungen zur Sortierung von Kunststoffobjekten, insbesondere im Rahmen eines Recyclingprozesses. Darüber hinaus bezieht sich die Offenbarung auch auf ein Verfahren und ein System zur Herstellung eines Kunststoffmaterials, insbesondere unter Verwendung eines recycelten Kunststoffrohmaterials.

Beim Recyceln bzw. der Wiederverwertung von Kunststoffen besteht eine der Aufgaben darin, die unterschiedlichen Kunststoffe sortenrein zu trennen. Dabei ist zu beachten, dass je nach Art der Wiederverwendung des Endprodukts nach Kunststoffart, Farbe und gegebenenfalls sogar nach dem Einsatzgebiet des Materials unterschieden werden muss. Beispielsweise sollte verhindert werden, dass das Material einer Kunststoffflasche, deren Inhalt aus Reinigungschemikalien bestand, zukünftig in der Matrix einer Kunststoffflasche für den Lebensmittelbereich wiederverwendet wird.

Es ist bekannt, zerkleinertes Kunststoffmaterial über ein Förderband zuzuführen und mittels eines Linienscanners in Form einer Infrarotkamera Spektren aufzuzeichnen, die anschließend ausgewertet werden. Der in einem Segment mittels spezifischem Infrarotspektrum erkannte Kunststoff wird dann im Anschluss entsprechend aussortiert.

Die oben genannten Infrarotkameras sind jedoch zum einen in der Anschaffung relativ kostenintensiv, und zum anderen können sie nicht an jedem Ort eingesetzt werden. Beispielsweise ist an Rücknahmestationen in Supermärkten, an denen das Recyclinggut als ganze Kunststoffobjekte einzeln zugeführt wird, eine Separation solcher einzelnen Objekte erforderlich.

Die US 2006 / 0 081 510 A1 offenbart ein System zum Sortieren von Partikeln mit schmalbandiger elektromagnetischer Strahlung.

Die US 2010 / 0 290 032 A1 betrifft ein Verfahren und ein System zum Messen und Bestimmen/Identifizieren von unterschiedlichen Materialien.

Die US 6 433 338 B1 betrifft ein Verfahren und eine Vorrichtung zum Identifizieren eines Typs eines Materials in einem Objekt und eine Anwendung davon.

Die DE 100 49 404 A1 zeigt einen mit einem NIR-Marker versehenen kunststoff-, glas-, textil- oder papierhaltigen Werkstoff und ein Verfahren zur Identifizierung dieses Werkstoffs.

Die US 7 175 086 B2 offenbart ein Authentifizierungssystem, eine Datenvorrichtung und Verfahren zur Verwendung derselben.

Die WO 2019/180438 A2 offenbart ein Recyclingverfahren und einen Marker für ein recycelbares Produkt.

CN 107703094 A offenbart ein Nahinfrarot-Sortiergerät.

DE 199 49 656 A1 betrifft ein Verfahren und eine Vorrichtung zur automatischen Fraktionierung von Kunststoffen, Metallen oder Gläsern.

WO 2017/220079 A1 offenbart ein Verfahren zur Identifikation von Materialien.

DE 42 31 477 A1 offenbart ein Verfahren zur optischen Sortierung von Kunststoffen mittels zeitaufgelöster Laserspektroskopie.

Daher ist es eine Aufgabe der Erfindung, ein Verfahren und eine Vorrichtung zur Sortierung von Kunststoffobjekten bereitzustellen, die auf möglichst praktikable und kostengünstige Weise einzelne Kunststoffobjekte nach ihrem Typ, beispielsweise dem verwendeten Kunststoffmaterial, der Farbe und gegebenenfalls sogar dem Verwendungszweck, sortieren kann. Diese Aufgabe wird gelöst durch ein Verfahren nach Anspruch 1 und eine Vorrichtung nach Anspruch 10. Weiterbildungen der Erfindung sind in den abhängigen Ansprüchen angegeben.

Im Zuge eines Recyclingprozesses ist es häufig auch erforderlich, sicherzustellen, dass ein Produkt, das unter der Verwendung von Recyclinggut gefertigt wird, einen vorgegebenen Anteil des Recyclingguts enthält. Beispielsweise können gesetzliche Vorgaben bestehen, die den Anteil an Recyclinggut in einem neu hergestellten Produkt vorschreiben. Dies hat zur Folge, dass auch eine strenge Kontrolle der Menge des eingebrachten Recyclingguts notwendig ist.

Demzufolge ist es eine weitere Aufgabe der vorliegenden Offenbarung, ein Verfahren und ein System bereitzustellen, mit denen eine vorgegebene Menge an Recyclinggut in ein neu hergestelltes Kunststoffmaterial eingebracht werden kann, wobei nach der Herstellung eine Kontrolle des Anteils des eingebrachten Recyclingguts durchgeführt werden kann.

Diese zusätzliche Aufgabe wird gelöst mit den Merkmalen des Aspekts 1 und des Aspekts 9 der vorliegenden Anmeldung.

Während bei den bekannten Sortiermaschinen Infrarotkameras verwendet werden, wird gemäß dem hierin beschriebenen Verfahren ein sogenanntes Mehrbereichsverfahren im Infraroten verwendet. Dabei wird zur Erkennung der Kunststoffart der verwendete Wellenlängenbereich in mehrere Transmissionsbereiche (optische Fenster) unterteilt, und es wird die Transmission bzw. Reflexion in den jeweiligen optischen Fenstern detektiert. Auf diese Weise muss kein kompliziertes Spektrum aufgenommen und ausgewertet werden. Stattdessen können die detektieren Intensitäten mit mehreren Referenzgrößen (Vektoren) verglichen werden, und diejenige Referenzgröße mit der größten Übereinstimmung gibt dann die Art des Kunststoffmaterials an. Dies macht sich die Tatsache zu Nutze, dass unterschiedliche Kunststoffarten unterschiedliche charakteristische Transmissions- bzw. Reflexionsverhalten bei unterschiedlichen Wellenlängen, insbesondere im Infraroten, aufweisen.

Für den Fall, dass eine Sortierung auch nach der Farbe der Kunststoffe erfolgen soll, müssen vorzugsweise mehrere Detektorarten in ein System integriert werden. Zur Farberkennung werden dabei integrierte Weißlichtquellen (LED) in Verbindung mit den Infrarot- (IR-) Lichtquellen verwendet. Durch das Setzen geeigneter Flags kann das System dann entweder nur nach Farbe, nur nach Art des Kunststoffs oder sowohl nach Farbe als auch nach Art des Kunststoffs sortieren. Darüber hinaus wurde festgestellt, dass bei der Ermittlung der Kunststoffart anhand der detektierten Reflexionen im Infraroten eine genauere Detektion in Verbindung mit der Bestimmung der Farbe des Kunststoffs möglich ist, da sich diese in gewissem Maße auf die detektierten Intensitäten auswirken kann. Auch dies ist mit dem hierin offenbarten integrierten System problemlos möglich.

Ferner tritt beim Recycling von beispielsweise Kunststofffflaschen häufig das Problem auf, dass diese beispielsweise mit Papieretiketten versehen sind. Diese Papieretiketten können jedoch die Bestimmung der Kunststoffart anhand der reflektierten Intensitäten, beispielsweise im Infraroten, beeinflussen. Daher ist es notwendig, sicherzustellen, dass die Kunststoffart in einem Bereich des Kunststoffobjekts detektiert wird, in dem sich kein Papieretikett befindet. Diesbezüglich hat sich als vorteilhaft erwiesen, Ultraviolett- (UV-) Lichtquellen vorzusehen und das Kunststoffobjekt auch mit diesen zu beleuchten. Da Papier bei Beleuchtung mit UV-Licht eine Fluoreszenz im Sichtbaren, insbesondere im blauen Wellenlängenbereich, aufweist, kann anhand der Detektion bzw. dem Nichtvorhandensein der Fluoreszenz bestimmt werden, wann ein geeigneter Detektionsbereich zur Detektion der Kunststoffart vorliegt.

Zur Sortierung der Kunststoffobjekte nach der Erkennung der Art und/oder der Farbe derselben werden bevorzugt mehrere hintereinandergeschaltete Ausblasdüsen verwendet, die beispielsweise der Reihe nach Kunststoffobjekte aus bestimmtem Kunststoffmaterial aus dem Strom derselben aussondern. Entsprechende Ausblasdüsen führen ebenfalls die Separation nach der Farbe und gegebenenfalls dem Verwendungszweck durch.

Bei der oben ebenfalls angesprochenen Wiederverwertung von Recyclingmaterial werden ein oder mehrere Marker (Kennzeichnungen, beispielsweise Partikel oder Stoffe mit bestimmten Eigenschaften) verwendet, um das Recyclingmaterial im Endprodukt detektieren zu können. Auf diese Weise kann kontrolliert werden, ob eine bestimmte Konzentration an Markern vorliegt, die einen Rückschluss auf die Menge bzw. den Anteil des recycelten Materials zulässt. Allerdings führt die Verwendung entsprechender Marker dazu, dass beispielsweise ein Teil des Recyclingmaterials bereits Marker enthält. Daher ist es nicht ausreichend, wenn dem Recyclingmaterial stets dieselbe Menge beispielsweise eines sogenannten Master-Batches mit einer vorgegebenen Konzentration der Marker zugegeben wird. Denn dies würde im Laufe der Zeit zu einer übermäßigen Erhöhung der Marker in dem zugegebenen Recyclingmaterial führen, was zum einen nicht erwünscht ist und zum anderen auch mit dem Vorwurf der Manipulation verbunden sein könnte. Denn zur Ermöglichung einer Kontrolle des Anteils an Recyclingmaterial ist es notwendig, dass das zugeführte Recyclingmaterial stets dieselbe Konzentration des Markers enthält.

Gemäß dem zusätzlichen Aspekt der vorliegenden Anmeldung wird daher die Konzentration des Markers in dem Recyclingmaterial detektiert und in Abhängigkeit von der detektierten Konzentration die Menge des zugegebenen Master-Batches mit dem Marker geeignet eingestellt. Ferner kann die richtige Einstellung der Konzentration des Markers durch eine oder mehrere weitere Detektionseinheiten im Laufe des Herstellungsprozesses kontrolliert werden.

Weitere Merkmale und Zweckmäßigkeiten ergeben sich aus der Beschreibung von Ausführungsbeispielen anhand der Figuren. Es zeigen:

Fig. 1 eine schematische Ansicht einer Vorrichtung zur Sortierung von Kunststoffobjekten gemäß der vorliegenden Erfindung;

Fig. 2 eine schematische Ansicht einer Sende-/Empfangseinheit der Vorrichtung in Fig. 1;

Fig. 3 eine Draufsicht auf eine beispielhafte Sende-/Empfangseinheit gemäß der vorliegenden Erfindung;

Fig. 4 eine teilweise Querschnittsansicht der Sende-/Empfangseinheit in Fig. 3;

Fig. 5 einen vergrößerten Ausschnitt einer Weißlicht-Emissionseinheit der Sende-/Empfangseinheit in Fig. 3;

Fig. 6 ein Diagramm zur Erläuterung unterschiedlicher Abklingverhalten von Lumineszenzen; und

Fig. 7 eine schematische Ansicht eines Systems zum Herstellen eines Kunststoffmaterials gemäß der vorliegenden Offenbarung.

Im Folgenden werden Ausführungsformen einer Vorrichtung zur Sortierung von Kunststoffobjekten und eines Systems zum Herstellen eines Kunststoffmaterials sowie zugehörige Verfahren unter Bezugnahme auf die Figuren beschrieben.

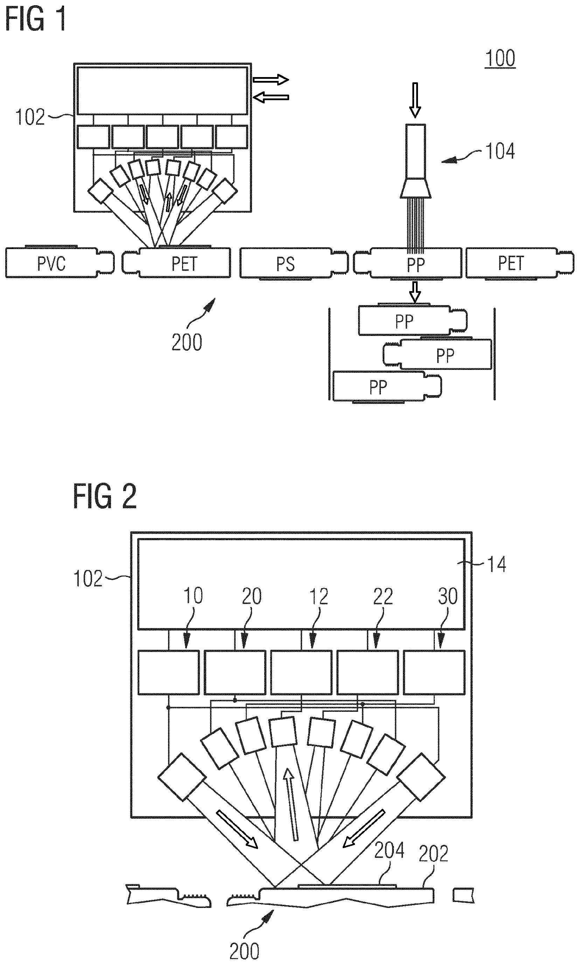

Fig. 1 zeigt eine schematische Ansicht einer Vorrichtung 100 zur Sortierung von Kunststoffobjekten 200, insbesondere im Rahmen eines Recyclingprozesses. Wie in Fig. 1 gezeigt, handelt es sich bei den Kunststoffobjekten beispielsweise um Kunststoffflaschen aus unterschiedlichen Kunststoffen, wie PVC, PET, PS, PP, etc. Die Kunststoffobjekte 200 werden über ein nicht gezeigtes Zufuhrsystem vereinzelt und einer geeigneten Förderanlage zugeführt, an der eine im Folgenden genauer beschriebene Sende-/Empfangseinheit 102 zur Detektion einer Art bzw. eines Typs des Kunststoffobjekts (des Kunststoffmaterials sowie gegebenenfalls einer Farbe und eines Verwendungszwecks desselben) vorgesehen ist. Auch wenn in Fig. 1 lediglich ein einzelner Strang einer entsprechenden Sortieranlage gezeigt ist, versteht sich, dass die vorliegende Erfindung auch bei Anlagen verwendet werden kann, bei denen das Recyclinggut zentral zugeführt und im Anschluss daran auf mehrere Stränge aufgeteilt wird. Es versteht sich ferner, dass in diesem Fall in jedem der Stränge eine Sende-/Empfangseinheit 102 enthalten ist.

Nach einer Detektion des Typs der einzelnen Kunststoffobjekte 200 werden diese durch eine herkömmliche Sortiereinheit 104, beispielsweise mehrere hintereinander angeordnete Ausblasdüsen, mit einer geeigneten Zeitsteuerung entsprechend aussortiert, beispielsweise in für jeden Typ speziell vorgesehene Behälter. Dies ist jedoch allgemein bekannt, so dass eine Beschreibung der Aussortierung hierin weggelassen wird.

Fig. 2 zeigt eine schematische Ansicht der Sende-/Empfangseinheit 102 in Fig. 1. Wie in Fig. 2 gezeigt, weist die Sende-/Empfangseinheit 102 eine IR-Sendeeinheit 10 zum Aussenden von IR-Licht (beispielsweise im Nahinfrarot- (NIR-) Bereich) in Richtung eines der Kunststoffobjekte 200 sowie eine IR-Detektionseinheit 12 zum Detektieren von IR-Intensitäten von an dem Kunststoffobjekt reflektiertem IR-Licht in mindestens zwei unterschiedlichen IR-Wellenlängenbereichen auf, was im Folgenden noch im Einzelnen erläutert wird. Darüber hinaus weist die Sende-/Empfangseinheit 102 eine Steuereinheit 14 zum Bestimmen eines Typs des Kunststoffobjekts durch Vergleichen mindestens der detektierten IR-Intensitäten mit einer Mehrzahl von Referenzgrößen, die jeweils unterschiedlichen Typen von Kunststoffobjekten zugeordnet sind, und Bestimmen der Referenzgröße mit der größten Übereinstimmung auf.

Die Sende-/Empfangseinheit 102 weist ferner eine Weißlicht-Emissionseinheit 20 und eine Farbdetektionseinheit 22 auf. Die Steuereinheit 14 ist dazu ausgebildet, die Weißlicht-Emissionseinheit 20 zum Emittieren von Weißlicht anzusteuern und basierend auf einer Detektion durch die Farbdetektionseinheit 22 eine Farbe des Kunststoffobjekts zu bestimmen. Ferner kann die Steuereinheit 14 dazu ausgebildet sein, den Typ des Kunststoffobjekts durch Vergleichen mindestens der detektierten IR-Intensitäten und von der Farbe des Kunststoffobjekts abgeleiteten Farbwerten mit den Mehrzahl von Referenzgrößen zu bestimmen.

Darüber hinaus weist die Sende-/Empfangseinheit 102 eine UV-Sendeeinheit 30 auf, wobei die Steuereinheit 14 dazu ausgebildet ist, die UV-Sendeeinheit 30 zum Aussenden von UV-Licht in der Richtung des Kunststoffobjekts anzusteuern und ansprechend darauf ein Fluoreszenzverhalten im sichtbaren Bereich zu bestimmen. Anhand des Fluoreszenzverhaltens bestimmt die Steuereinheit 14 einen IR-Detektionsbereich 202 an dem Kunststoffobjekt. Insbesondere ist der IR-Detektionsbereich 202 ein Bereich des Kunststoffobjekts, der frei von Etiketten, wie beispielsweise einem Papieretikett 204, ist.

Es versteht sich, dass für jede der Sende- bzw. Emissionseinheiten eine geeignete Treiberelektronik vorgesehen ist, über die die Steuereinheit 14 mit den jeweiligen Lichtquellen, beispielsweise eine oder mehrere LED, in Verbindung steht. Ebenso sind geeignete Empfängerelektroniken zur Detektion des reflektierten Lichts vorgesehen, wie dies in Fig. 2 für das reflektierte IR-Licht beispielhaft gezeigt ist. Die Steuereinheit ist auf bekannte Weise als ein Mikrocomputer oder Controller mit Elektronikkomponenten wie einem Speicher, einem Prozessor etc. ausgebildet und kann unter Verwendung geeigneter Software und Hardware die hierin beschriebenen Verfahren und Steuerungen sowie Detektionen und Berechnungen durchführen. Ferner kann die Steuereinheit mit einer externen Datenverarbeitungsvorrichtung in Verbindung stehen und zusammenwirken, um die Sende-/Empfangseinheit 102 und die Sortiereinheit 104 auf die hierin beschriebene Weise zu steuern. Bei einigen Ausführungsformen kann die Steuereinheit 14 separat von der Sende-/Empfangseinheit 102 vorgesehen sein und mit dieser in Verbindung stehen.

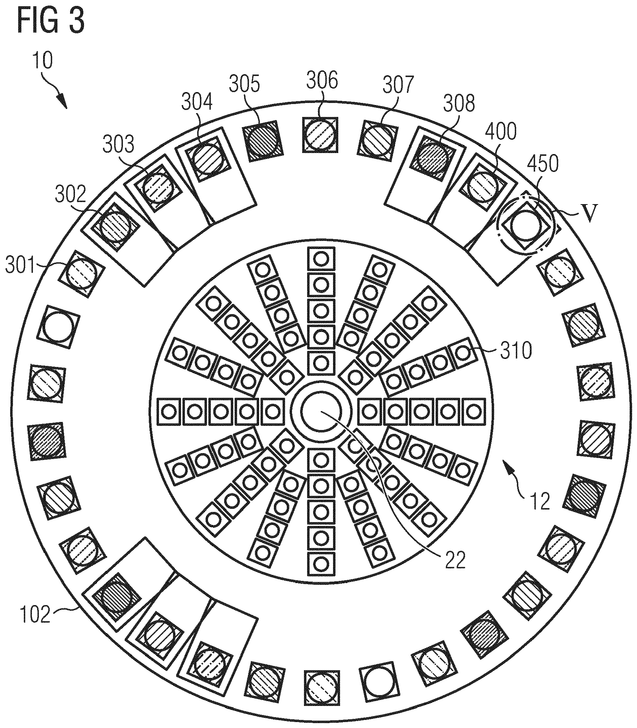

Die Steuereinheit 14 ist bei der vorliegenden Ausführungsform dazu ausgebildet, die IR-Sendeeinheit 10 zum zeitlich aufeinanderfolgenden Aussenden des IR-Lichts in den mindestens zwei unterschiedlichen IR-Wellenlängenbereichen anzusteuern. Dabei weist die IR-Sendeeinheit 10 mehrere unterschiedliche IR-LED 301-308 auf, beispielsweise drei oder mehr, insbesondere acht, wie bei dem in Fig. 3 gezeigten Beispiel. Die mehreren unterschiedlichen IR-LED 301-308 senden jeweils das Licht in den mehreren unterschiedlichen IR-Wellenlängenbereichen aus.

Wie in Fig. 3 gezeigt, können dabei für jeden IR-Wellenlängenbereich mehrere, beispielsweise drei, identische IR-LED 301-308 vorgesehen sein, die in einer Umfangsrichtung um ein Zentrum der IR-Sendeeinheit 10 in regelmäßigen Intervallen angeordnet sind. Jede der IR-LED 301-308 der vorliegenden Ausführungsform ist dazu ausgebildet, IR-Licht in einem Bereich zwischen 1000 nm und 2200 nm, insbesondere zwischen 1000 nm und 1700 nm, auszusenden. Beispielsweise können IR-LED 301-308 verwendet werden, die Zentralwellenlängen im Bereich von 1050 nm bis 1650 nm aufweisen, beispielsweise bei 1050 nm, 1100 nm, 1150 nm, 1250 nm, 1350 nm, 1450 nm, 1550 nm und 1650 nm.

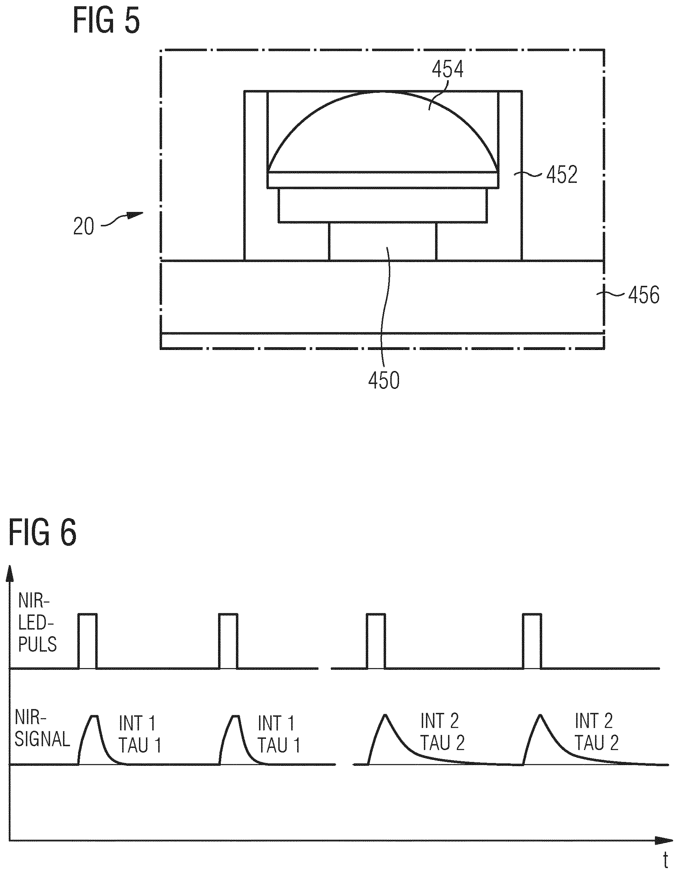

Wie in Fig. 3 gezeigt, sind auf demselben Radius wie die IR-LED 301-308 ferner eine Weißlicht-LED 450 und eine UV-LED 400 (mit einer Zentralwellenlänge beispielsweise von 365 nm) ebenfalls mit regelmäßigen Abständen insgesamt dreifach vorgesehen. Es versteht sich, dass bei anderen Ausführungsformen die Weißlicht-LED 450 und die UV-LED 400 bei unterschiedlichen Radien vorgesehen sein können. Fig. 5 zeigt eine vergrößerte Ansicht V der Weißlicht-LED 450. Wie in Fig. 5 gezeigt, ist die die Weißlicht-LED 450 in einem Gehäuse 452 aufgenommen, das von einer Linse 454 verschlossen ist. Die Weißlicht-LED 450 mit dem Gehäuse 452 ist auf einer Leiterplatte 456 angeordnet, beispielsweise einer Platine mit einem Aluminiumkern (nicht gezeigt), die zur effizienten Wärmeabfuhr dient. Es versteht sich, dass auch alle anderen LED der Sende-/Empfangseinheit 102 auf derartigen Leiterplatten vorgesehen sein können. Darüber hinaus ist für den Fachmann offensichtlich, dass einige oder alle der LED eine integrierte Linse (einen sogenannten Dom) anstelle der externen Linse 454 aufweisen können.

Wie ebenfalls in Fig. 3 gezeigt, weist die Detektionseinheit 12 bei der vorliegenden Ausführungsform mehrere parallel geschaltete breitbandige IR-Fotodioden 310 auf, die zum Detektieren des reflektierten IR-Lichts in den unterschiedlichen IR-Wellenlängenbereichen ausgebildet sind. Insbesondere sind die IR-LED 301-308 und die IR-Fotodioden 310 in der Sende-/Empfangseinheit 102 integriert, wobei die IR-Fotodioden 310 im Zentrum der IR-Sendeeinheit 10 angeordnet sind, beispielsweise als im Wesentlichen sternförmig angeordnete, in radialer Richtung verlaufende Reihen von IR-Fotodioden 310. Gegebenenfalls können die mehreren IR-Fotodioden 310 in mehrere, beispielsweise unterschiedliche Abstände zum Zentrum der IR-Sendeeinheit 10 aufweisende Gruppen von IR-Fotodioden unterteilt sein. Dies kann von Vorteil sein, da aufgrund der Parallelschaltung der IR-Fotodioden 310 die Kapazität zur Wiedergabe von schnellen Signalvorgängen unerwünscht groß werden kann, so dass die höherfrequenten Anteile der Signale möglicherweise nicht wiedergegeben werden können. Um dem vorzubeugen, kann deshalb die Aufteilung in die mehreren Gruppen (Zweige) hilfreich sein. Auf diese Weise wird die Kapazität jedes Zweigs verringert, und die Grenzfrequenz des Tiefpasses am Ausgang des jeweiligen Transimpedanzempfängers wird entsprechend erhöht. Eine Addition der einzelnen Zweige zu einem Gesamtsignal kann beispielsweise nach einer A/D-Wandlung mittels geeigneter Software in der Steuerung 14 erfolgen. Darüber hinaus kann durch die Unterteilung in mehrere Gruppen auch eine ortsabhängige (lokale) Auswertung erfolgen. Beispielsweise könnte bei anderen Ausführungsformen eine Anordnung der IR-Fotodioden 310 in mehreren, beispielsweise parallelen Reihen verwendet werden. Die jeweiligen LED werden dann entlang der Reihen bzw. zwischen denselben angeordnet. So können in der Längsrichtung der Reihen erneut mehrere Gruppen von IR-Fotodioden 310 festgelegt werden, beispielsweise jeweils die ersten drei jeder Reihe, dann die nächsten drei etc. (wobei drei lediglich beispielhaft ist und jede Gruppe aus mehr oder weniger IR-Fotodioden bestehen kann). Auch in diesem Fall werden die einzelnen IR-LED zeitlich versetzt zueinander angesteuert und die durch die jeweiligen Pulse ausgelösten Reflexionen in den unterschiedlichen Wellenlängenbereichen detektiert.

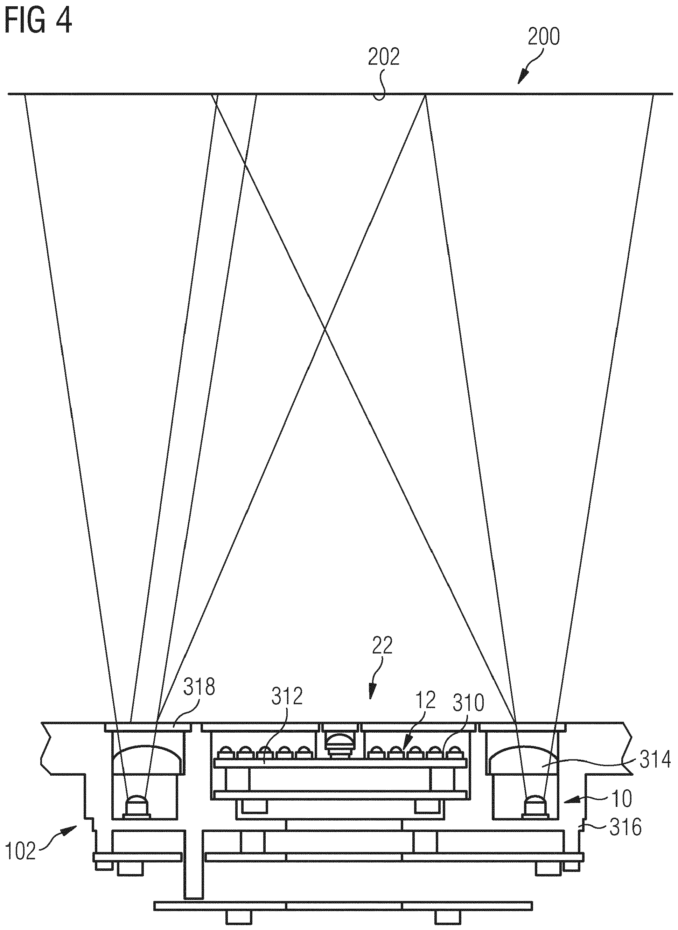

Fig. 4 zeigt eine Querschnittsansicht durch einen Teil der Sende-/Empfangseinheit 102 in Fig. 3. Wie in Fig. 4 gezeigt, ist die Farbdetektionseinheit 22 im Zentrum der Sende-/Empfangseinheit 102 angeordnet und dazu ausgebildet, das von der Weißlicht-LED 450 (siehe Fig. 3) ausgesandte und von den Kunststoffobjekten 200 reflektierte Licht zu detektieren. Das heißt, die Steuereinheit 14 ist dazu ausgebildet, die Weißlicht-Emissionseinheit 20 zum Emittieren von Weißlicht anzusteuern und basierend auf einer Detektion durch die Farbdetektionseinheit 22 eine Farbe des Kunststoffobjekts zu bestimmen. Die Einzelheiten einer solchen Farbbestimmung sind bekannt, so dass eine detaillierte Beschreibung weggelassen wird. Beispielsweise können die Intensitäten des reflektierten Lichts im roten, grünen und blauen Wellenlängenbereich detektiert werden und basierend darauf entsprechende Farbwerte (xyY oder L*a*b*) berechnet werden. Die Farbdetektionseinheit 22 dient ferner zur Detektion der Fluoreszenz aufgrund der Emission von UV-Licht durch die UV-Sendeeinheit 30. Es versteht sich, dass die UV-Sendeeinheit dazu zeitversetzt zu der Weißlicht-Emissionseinheit 20 angesteuert wird.

Wie in Fig. 4 gezeigt, sind bei der beispielhaften Ausführungsform die IR-Sendeeinheit 10 und die IR-Detektionseinheit 12 (die IR-Fotodioden 310) auf unterschiedlichen Niveaus und bevorzugt in unterschiedlichen, voneinander getrennten Gehäuseabschnitten angeordnet und auf jeweiligen Leiterplatten 312, 316 montiert. Es versteht sich, dass vor jeder IR-LED 301-308 beispielsweise eine geeignete Optik mit einer Linse 314 und einem Filter 318 vorgesehen sein kann, um sicherzustellen, dass das ausgesandte IR-Licht auf geeignete Weise in Richtung einer durch das Zentrum der Sende-/Empfangseinheit 102 verlaufenden zentralen Achse ausgesandt und auf das Kunststoffobjekt 200, insbesondere den IR-Detektionsbereich 202 desselben, fokussiert wird.

Im Folgenden wird ein beispielhaftes Verfahren zur Sortierung der Kunststoffobjekte 200 unter Bezugnahme auf die Figuren beschrieben. Um den Typ bzw. die Eigenschaften oder Spezifikationen des Kunststoffobjekts, insbesondere die Art des verwendeten Kunststoffmaterials, die Farbe und den Verwendungszweck desselben, detektieren zu können, müssen zunächst geeignete Objektklassen definiert werden sowie den einzelnen Objektklassen zugeordnete Referenzgrößen bestimmt werden. Dies kann zum einen empirisch durchgeführt werden, beispielsweise während eines Betriebs der Anlage durch geeignete Lernroutinen (z.B. mittels KI, neuronalen Netzen oder anderer geeigneter Software), oder aber durch gezieltes Platzieren einzelner Objekte im korrekten Abstand und in der richtigen Position zu der Sensoroptik. Die einzelnen Objekte werden dann als die jeweiligen Referenzgrößen angelegt, die jeweils den Typ des Kunststoffobjekts angeben. Es versteht sich, dass die Referenzgrößen zusätzlich oder alternativ auch theoretisch ermittelt (berechnet) werden können, anhand des erwarteten Reflexionsverhaltens unterschiedlicher Materialien.

Beispielsweise enthält eine solche Referenzgröße Werte für jede der detektierten Intensitäten IR1-IRn (n = 2, 3, ...) im Infraroten, sowie einen Normierungsfaktor, der die Summe aus allen detektierten Intensitäten angibt. Bevorzugt werden dabei normierte Intensitäten ir1, ..., irn (n = 2, 3, ...) verwendet, wobei die normierten Intensitäten und der Normierungsfaktor B wie folgt gegeben sind:

$$ir1 = IR1/(IR1 + \ldots + IRn)$$

$$\ldots$$

$$irn = IRn/(IR1 + \ldots + IRn)$$

$$B = IR1 + \ldots + IRn)$$

Weitere Bestandteile der jeweiligen Referenzgröße sind beispielsweise drei Farbwerte (z.B. x, y, INT), die unter Verwendung der Farbdetektionseinheit 22 erhalten werden, sowie mehrere Werte (z.B. UV-x, UV-y, UV-INT), die einem aufgrund von Emission im Ultravioletten detektierten Licht, beispielsweise im sichtbaren Bereich (in diesem Fall kann zur Detektion die Farbdetektionseinheit 22 verwendet werden), zugeordnet sind. Das heißt, bei dem vorliegenden Beispiel enthält jede Referenzgröße 3 + 3 + 9 Werte. Bei einigen Ausführungsformen müssen nicht alle Werte ir1, ..., irn berechnet bzw. verwendet werden, da natürlich gilt im = 1 - (ir1 + ... + irn-1). Ferner können bei einigen Ausführungsformen beliebige Kombinationen aus den Werten als die Referenzgröße bzw. für die Bestimmung der Referenzgröße mit der größten Übereinstimmung verwendet werden.

Während des Betriebs der Sortieranlage erfolgt zunächst eine Detektion bzw. Triggerung eines Objekts. Dies erfolgt dabei beispielsweise mittels der Farbdetektionseinheit 22, die beispielsweise eine von einem Referenzwert abweichende Farbe detektiert. Im Anschluss werden die weiteren für den Vergleich mit den Referenzgrößen benötigten Werte detektiert. Das heißt, beispielsweise werden die LED 301-308 von der Steuereinheit 14 der Reihe nach angesteuert, um IR-Licht auszusenden, und das reflektierte IR-Licht in den jeweiligen Wellenlängenbereich wird durch die IR-Detektionseinheit 12 detektiert, die synchron oder leicht phasenverschoben zu der Emission der IR-Pulse angesteuert wird. Sofern nicht bereits durch den Trigger-Vorgang erhalten, werden im Anschluss daran die Farbwerte durch Aktivieren der Weißlicht-LED 450 und Detektieren des reflektierten Lichts mittels der Farbdetektionseinheit 22 erhalten. Optional kann auch die UV-LED 400 aktiviert werden, um Farbwerte des aufgrund des UV-Lichts ausgesandten reflektierten oder aufgrund von Lumineszenz emittierten Lichts im sichtbaren Bereich zu detektieren.

Es versteht sich, dass die einzelnen Detektionsvorgänge während des Passierens eines Kunststoffobjekts 200 binnen kürzester Zeit mehrmals durchgeführt werden können. Auf diese Weise kann, wie oben bereits erläutert, durch die UV-Sendeeinheit 30 sichergestellt werden, dass ein Detektionsbereich 202 für die Detektion verwendet wird, in dem kein Papieretikett oder dergleichen an dem Kunststoffobjekt ist. Für den Fall, dass mehrere Detektionen an einem Kunststoffobjekt durchgeführt werden, können auf geeignete Weise Mittelwerte gebildet werden oder aus der Reihe fallende Messwerte unberücksichtigt bleiben.

Zur Bestimmung des Typs des Kunststoffobjekts 200 wird nun beispielsweise im Rahmen eines "Best Hit"-Verfahrens diejenige mehrdimensionale Referenzgröße ermittelt, die die beste Übereinstimmung mit den detektierten Werten aufweist. Für den Fachmann ist dabei offensichtlich, wie in dem m-dimensionalen Vektorraum (m = 2, 3, ...), der durch die Gesamtheit der einzelnen Detektionswerte aufgespannt wird, der minimale Abstand zu einer der Referenzgrößen bestimmt werden kann. Die Referenzgröße mit dem minimalen Abstand ist dann diejenige Referenzgröße, die den Typ des Kunststoffobjekts 200 angibt. Die Referenzgröße kann ferner angeben, ob eine Sortierung nach dem verwendeten Kunststoffmaterial (nach der Art) und/oder nach der Farbe erfolgen soll. Das heißt, geeignete Flags können entsprechend gesetzt sein.

Nachdem die Referenzgröße mit der größten Übereinstimmung gefunden worden ist, kann die Steuereinheit 14 die Sortiereinheit 104 (bzw. die mehreren Ausblasdüsen derselben) auf geeignete Weise zeitsynchron ansteuern, um das Kunststoffobjekt 200 je nach seinem Typ dem geeigneten Sortierbehälter zuzuführen. Wie bereits erwähnt, ist es dabei von Vorteil, auch die jeweiligen Farbwerte zum Abgleichen mit den Referenzgrößen zu verwenden, auch wenn lediglich nach der Kunststoffart sortiert werden soll.

Ferner kann die Genauigkeit, wie ebenfalls bereits erwähnt, dadurch erhöht werden, dass ein geeigneter Detektionsbereich 202 bestimmt wird, beispielsweise als ein Bereich, in dem eine Intensität einer Fluoreszenz im sichtbaren Bereich, beispielsweise im blauen Wellenlängenbereich, bei Bestrahlung mit UV-Licht unterhalb eines vorbestimmten Schwellenwerts liegt.

Wie bereits erläutert, kann es zusätzlich auch wünschenswert sein, das Kunststoffobjekt nach seinem Verwendungszweck unterschiedlich einzusortieren. Dies kann beispielsweise durch Detektieren des Vorhandenseins oder Fehlens eines oder mehrerer Marker, beispielsweise Stoffe, die eine Lumineszenz im sichtbaren Bereich oder im IR-Bereich aufweisen, ermöglicht werden. So können beispielsweise Behälter bzw. Verpackungen von Lebensmitteln, Behälter für Reinigungsmittel wie Flüssigseifen, Behälter zur Aufbewahrung von Abflussreinigern, etc. geeignet sortiert werden. Es können beispielsweise phosphoreszierende Down-Converter eingesetzt werden, sowie Marker, die eine Anregung im UV- Bereich aufweisen und eine Sekundäremission in sichtbaren Wellenlängenbereichen aufweisen. Natürlich können auch Marker verwendet werden, die im Sichtbaren angeregt werden und im roten Wellenlängenbereich oder im Nahinfrarotbereich nachleuchten. Schließlich können auch Marker verwendet werden, die mit IR-Licht angeregt werden und bei niedrigeren Energien emittieren. Insbesondere können jeweilige Zeitkonstanten sowie Anfangsintensitäten der Lumineszenz bzw. des Nachleuchtens erfasst werden. Dies ist beispielsweise in Fig. 6 gezeigt. Dort sind zwei unterschiedliche Marker gezeigt, die zwar im Wesentlichen dieselbe Anfangsintensität des Nachleuchtens aufweisen, jedoch unterschiedliche Abklingzeiten $\tau1$ bzw. $\tau2$ haben. Das heißt, bei dem in Fig. 6 gezeigten Beispiel könnte so zwischen zwei Kunststoffen, die zwar aus identischem Material bestehen und eine identische Farbe aufweisen, jedoch für unterschiedliche Zwecke verwendet werden sollen, unterschieden werden. Eine Sortierung von Kunststoffobjekten nach ihrem Verwendungszweck wird beispielsweise nach der oben beschriebenen Bestimmung des Typs der Kunststoffobjekte und einer entsprechenden Vorsortierung durchgeführt.

Es versteht sich, dass die oben im Einzelnen beschriebene Sende-/Empfangseinheit 102 lediglich beispielhaft ist, und selbstverständlich mehr oder weniger als acht unterschiedliche IR-LED eingesetzt werden können. Ferner kann die Anordnung der IR-LED von der in Fig. 3 gezeigten Anordnung abweichen. Entsprechendes gilt für die Weißlicht-LED 450 und die UV-LED 400. Ferner können auch die Anzahl, Anordnung und Position der einzelnen LED bezüglich der IR-Fotodioden 310 unterschiedlich sein. Entsprechendes gilt auch für die Farbdetektionseinheit 22. Darüber hinaus ist es nicht zwingend notwendig, als IR-Lichtquelle IR-LED zu verwenden, die gepulst betrieben werden. Beispielsweise ist es auch denkbar, eine kontinuierliche IR-Lichtquelle einzusetzen und die Reflexion durch für die jeweiligen Wellenlängenbereiche vorgesehene IR-Fotodioden (gegebenenfalls unter Einsatz geeigneter Filter) zu detektieren.

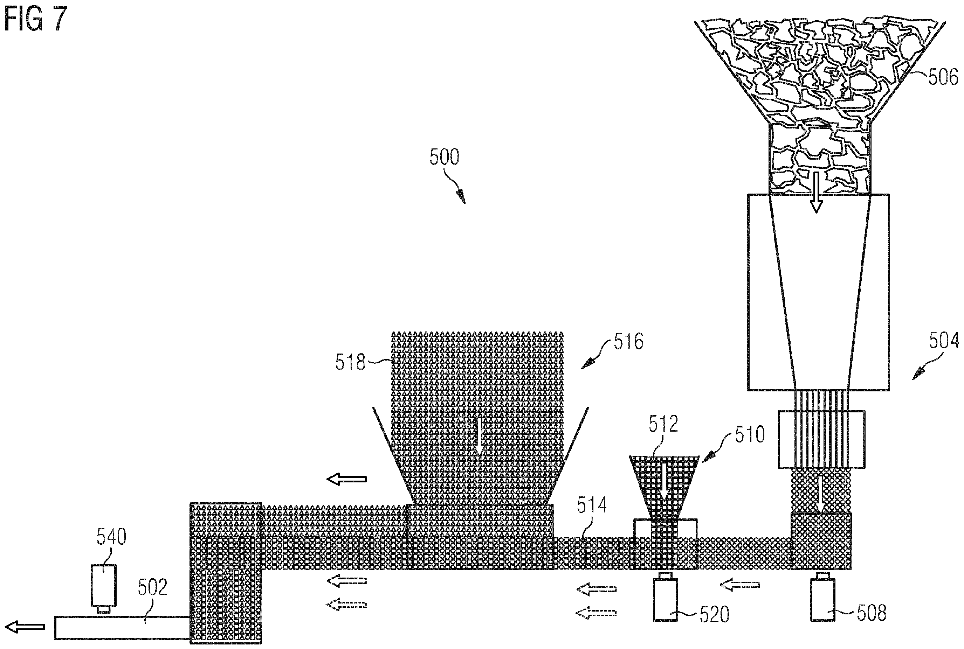

Die oben beschriebenen Marker, die beispielsweise zur Identifizierung von Kunststoffobjekten, die in unterschiedlichen Bereichen einzusetzen sind, verwendet werden, können ebenfalls dazu dienen, festzustellen, welcher prozentuale Anteil an Recyclingmaterial in einem Endprodukt enthalten ist. Nach der Beimengung des Markers sollte das Recyclinggut eine konstant bleibende Konzentration von Markern aufweisen. Es versteht sich, dass dabei eine Kontrolle erfolgen muss, damit auf Seite des Herstellers nicht übermäßig Material mit dem Marker zugegeben wird, um die Konzentration zu erhöhen, so dass nicht die erforderliche Menge an Recyclinggut verwendet werden muss. Ein System bzw. ein Verfahren, mit dem eine konstante (vorgegebene) Markerkonzentration erreicht werden kann, wird im Folgenden unter Bezugnahme auf Fig. 7 beschrieben.

Wie in Fig. 7 gezeigt, weist ein System 500 zum Herstellen eines Kunststoffmaterials 502, das zum Teil aus wiederverwertetem (recyceltem) Kunststoff besteht, eine erste Zufuhreinheit 504 zum Zuführen eines ersten Kunststoffrohmaterials 506, das insbesondere ein recyceltes Kunststoffrohmaterial ist, auf. Ferner weist das System 500 eine erste Detektionseinheit 508 zum Bestimmen einer Konzentration eines Markers, der eine Lumineszenz aufweist, in dem zugeführten ersten Kunststoffrohmaterial durch Detektion einer Intensität der Lumineszenz auf. Dabei kann, wie in Bezug auf Fig. 6 beschrieben, beispielsweise die Konzentration des Markers anhand einer Anfangsintensität der Lumineszenz des die erste Detektionseinheit 508 passierenden Materials bestimmt werden. Bei diesem Material handelt es sich beispielsweise um zerkleinertes und bereits nach Kunststoffart vorsortiertes Recyclingmaterial, das einem Extruder zugeführt, aufgeschmolzen, in Stränge verarbeitet und anschließend zu Granulat zerkleinert wurde. Insbesondere kann die Detektionseinheit 508 dazu ausgebildet sein, nach einem bestimmten Marker zu suchen, der eine bekannte Abklingzeit aufweist. Ferner kann anhand der Anfangsintensität die Konzentration des Markers gemessen werden. Das heißt, anhand des Absolutwerts der Anfangsintensität kann rechnerisch die Konzentration des Markers erhalten werden. Falls notwendig, kann eine geeignete Kalibrierung der Detektionseinheit 508 erfolgen, so dass bei einer Detektion in einem vorgegebenen Abstand eine eindeutige Zuordnung zwischen Anfangsintensität und Markerkonzentration erfolgen kann.

Für den Fall, dass in ein und derselben Anlage unterschiedliche Kunststoffe verarbeitet werden, versteht sich, dass unterschiedliche Marker detektiert werden können. Gegebenenfalls sind dazu mehrere Detektionseinheiten 508 vorgesehen. Für den Fall, dass die Art des Kunststoffmaterials nicht bekannt ist, sondern im Rahmen des Prozesses zuerst bestimmt werden muss, kann auf diese Weise nach unterschiedlichen Markern gesucht werden, eine Anfangsintensität und/oder eine Abklingkonstante von Lumineszenzen zur Identifizierung eines Markers bestimmt werden, und basierend darauf die weitere Verarbeitung erfolgen, was im Folgenden noch erläutert wird.

Das System 500 weist ferner eine zweite Zufuhreinheit 510 zum Zuführen eines zweiten Kunststoffrohmaterials 512, das eine höhere Konzentration des Markes als das erste Kunststoffrohmaterial 506 aufweist, zu dem ersten Kunststoffrohmaterial in Abhängigkeit von der bestimmten Konzentration des Markes in dem ersten Kunststoffrohmaterial auf. Insbesondere führt die zweite Zufuhreinheit 510 ein sogenanntes Master-Batch mit einer vergleichsweise hohen (festgelegten bzw. bekannten) Konzentration des Markers zu. Dies geschieht auf eine Weise, so dass eine resultierende Mischung 514 aus dem ersten und dem zweiten Kunststoffrohmaterial erhalten wird, die eine vorgegebene Soll-Konzentration des Markers aufweist. Die Soll-Konzentration bestimmt sich dabei nach dem Anteil, den das Recyclingmaterial (die Mischung 514) später in dem Endprodukt haben soll. Dazu kann die Soll-Konzentration eine vorgegebene Konzentration sein, so dass basierend darauf dann anhand einer Detektion an dem Endprodukt ein Rückschluss auf den Anteil des Recyclingmaterials gezogen werden kann. Es versteht sich, dass die Menge an zweitem Kunststoffrohmaterial (Master-Batch) im Vergleich zu dem ersten Kunststoffrohmaterial gering bzw. vernachlässigbar ist, beispielsweise etwa 1 bis 2 Prozent beträgt. Ferner versteht sich, dass für den Fall, dass das erste Kunststoffrohmaterial bereits die Soll-Konzentration aufweist, keine Zufuhr des zweiten Kunststoffrohmaterials erfolgt.

Die Mischung 514 wird einer dritten Zufuhreinheit 516 zugeführt, die ein drittes Kunststoffrohmaterial (beispielsweise Neumaterial) 518, das den Marker nicht enthält, in einem vorbestimmten Verhältnis zu der Mischung 514 zuführt. Auf diese Weise wird das Kunststoffmaterial 502 erhalten, das einen vorbestimmten Anteil im Wesentlichen des ersten Kunststoffrohmaterials 506 (d.h. der Mischung 514) enthält.

Gegebenenfalls kann eine zweite Detektionseinheit 520 zum Bestimmen einer Konzentration des Markers in dem zweiten Kunststoffrohmaterial 512 vor dem Zuführen desselben und/oder in der Mischung 514 vorgesehen sein. Die zweite Zufuhreinheit 510 ist ggf. zum (weiteren) Einstellen bzw. Regeln der Menge des zugeführten zweiten Kunststoffrohmaterials 512 basierend auf der bestimmten Konzentration des Markers in dem zweiten Kunststoffrohmaterial und/oder der Mischung 514, so dass die Mischung die Soll-Konzentration des Markers aufweist, ausgebildet. Es versteht sich, dass die jeweiligen Zufuhreinheiten jeweilige Steuereinheiten aufweisen oder mit solchen verbunden sind, die die Komponenten wie Düsen, etc. der jeweiligen Zufuhreinheiten geeignet steuern können.

Bei einigen Ausführungsformen kann das zweite Kunststoffmaterial eine im Voraus festgelegte Konzentration des Markers aufweisen. Das heißt, das zugeführte Master-Batch kann eine bekannte Konzentration des Markers aufweisen. Diese Konzentration kann jedoch durch die zweite Detektionseinheit 520 während des Prozesses kontinuierlich überprüft werden, um gegebenenfalls Abweichungen korrigieren zu können. Ferner können die Detektionsergebnisse der zweiten Detektionseinheit 520 zur Prozessüberwachung und Dokumentation gespeichert werden. Beispielsweise kann zur Gewährleistung der Einhaltung der Vorschriften im Hinblick auf den Anteil des recycelten Materials bzw. die Markerkonzentration ein sicheres, ggf. verschlüsseltes und vor Manipulation geschütztes Verfahren verwendet werden. Alternativ kann auch die Steuersoftware, die beispielsweise die zweite Zufuhreinheit 510 in Abhängigkeit von der Detektion durch die Detektionseinheiten 508 und 520 steuert, so ausgebildet sein, dass Manipulationen ausgeschlossen sind.

Weiter stromabwärts wird das Rohmaterial ohne Marker (in der Regel Neumaterial) der Mischung 514 beigemengt, in dem beispielsweise vom Gesetzgeber vorgegebenen Verhältnis. Abschließend kann dann nach Einschmelzen und Extrudieren des erhaltenen Kunststoffmaterials 502 eine weitere Überprüfung mittels einer dritten Detektionseinheit 540 erfolgen. Auf diese Weise kann nochmals überprüft werden, ob die gewünschte Konzentration des Markers vorliegt.

Mit dem oben beschriebenen System wird insbesondere der Tatsache Rechnung getragen, dass das recycelte Kunststoffmaterial 506 bereits unterschiedliche Konzentrationen von Markern enthalten kann. Das heißt, es wird nur so viel des Master-Batches 512 zugeführt, wie benötigt wird, um die notwendige Soll-Konzentration des Markers in der Mischung 514 und damit im Endprodukt 502 zu ergeben. Somit kann eine unnötige Zugabe des Markers vermieden werden.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zur Sortierung von Kunststoffobjekten (200), insbesondere im Rahmen eines Recyclingprozesses, mit

   Aussenden von IR-Licht in Richtung eines der Kunststoffobjekte,
   Detektieren von IR-Intensitäten IR1, ..., IRn von an dem Kunststoffobjekt reflektiertem IR-Licht in mindestens zwei unterschiedlichen IR-Wellenlängenbereichen,
   Bestimmen einer Farbe des Kunststoffobjekts,
   Bestimmen eines Typs des Kunststoffobjekts, der das verwendete Kunststoffmaterial angibt, durch Vergleichen mindestens der detektierten IR-Intensitäten und von der Farbe des Kunststoffobjekts abgeleiteten Farbwerten mit einer Mehrzahl von Referenzgrößen, die jeweils unterschiedlichen Typen von Kunststoffobjekten zugeordnet sind, und Bestimmen der Referenzgröße mit der größten Übereinstimmung,
   Sortieren des Kunststoffobjekts nach seinem Typ,
   Bestimmen eines Verwendungszwecks des Kunststoffobjekts durch Detektieren des Vorhandenseins oder Fehlens eines oder mehrerer Marker, die einem bestimmten Verwendungszweck zugeordnet sind und eine Lumineszenz im sichtbaren Bereich oder im IR-Bereich aufweisen, wobei das Vorhandensein des einen oder der mehreren Marker durch Erfassen einer Abklingzeit der Lumineszenz derselben detektiert wird, und

Sortieren des Kunststoffobjekts nach seinem Verwendungszweck.

2. Verfahren nach Anspruch 1, bei dem das IR-Licht in den mindestens zwei unterschiedlichen IR-Wellenlängenbereichen zeitlich aufeinanderfolgend ausgesendet wird, beispielsweise durch unterschiedliche IR-LED (301-308).

3. Verfahren nach Anspruch 1 oder 2, bei dem die Detektion mittels einer breitbandigen IR-Detektionseinheit (12), beispielsweise eine oder mehrere parallel geschaltete IR-Fotodioden (310), erfolgt.

4. Verfahren nach Anspruch 1, ferner mit

Aussenden des IR-Lichts in den mindestens zwei unterschiedlichen IR-Wellenlängenbereichen unter Verwendung einer breitbandigen IR-Lichtquelle und
Detektieren der IR-Intensitäten durch unterschiedliche, jeweils den mindestens zwei IR-Wellenlängenbereichen zugeordnete IR-Detektionseinheiten, beispielsweise IR-Fotodioden.

5. Verfahren nach einem der Ansprüche 1 bis 4, bei dem anhand der detektierten Intensitäten normierte Intensitäten ir1, ..., irn und ein Normierungsfaktor B bestimmt werden, die gegeben sind durch:

$$ir1 = IR1/(IR1 + \ldots + IRn)$$

$$\ldots$$

$$irn = IRn/(IR1 + \ldots + IRn)$$

$$B = IR1 + \ldots + IRn$$

und
bei dem der Typ des Kunststoffobjekts durch Vergleichen einer Kombination aus den normierten IR-Intensitäten und dem Normierungsfaktor mit der Mehrzahl von Referenzgrößen bestimmt wird.

6. Verfahren nach einem der Ansprüche 1 bis 5, bei dem die mindestens zwei IR-Wellenlängenbereiche im Bereich zwischen 1000 nm und 2200 nm, insbesondere 1000 nm bis 1700 nm, liegen.

7. Verfahren nach einem der Ansprüche 1 bis 6, bei dem mindestens drei, bevorzugt mehr als drei, insbesondere 8 unterschiedliche IR-Wellenlängenbereiche verwendet werden.

8. Verfahren nach einem der Ansprüche 1 bis 7, ferner mit

Aussenden von UV-Licht in Richtung des Kunststoffobjekts und

Bestimmen eines IR-Detektionsbereichs (202) an dem Kunststoffobjekt anhand eines Fluoreszenzverhaltens unterschiedlicher Bereiche des Kunststoffobjekts im sichtbaren Bereich,
bei dem bevorzugt ein Bereich, in dem eine Intensität einer Fluoreszenz im sichtbaren Bereich, beispielsweise im blauen Wellenlängenbereich, unterhalb eines vorbestimmten Schwellenwerts liegt, als der IR-Detektionsbereich (202) bestimmt wird.

9. Verfahren nach einem der Ansprüche 1 bis 8, bei dem der Typ des Kunststoffobjekts das verwendete Kunststoffmaterial in Verbindung mit einer Farbe desselben angibt, wobei bevorzugt der Typ des Kunststoffmaterials ferner angibt, ob eine Sortierung nach dem verwendeten Kunststoffmaterial und/oder nach der Farbe erfolgen soll.

10. Vorrichtung (100) zur Sortierung von Kunststoffobjekten (200), insbesondere im Rahmen eines Recyclingprozesses, mit

einer IR-Sendeeinheit (10) zum Aussenden von IR-Licht in Richtung eines der Kunststoffobjekte (200),
einer IR-Detektionseinheit (12) zum Detektieren von IR-Intensitäten IR1, ..., IRn von an dem Kunststoffobjekt reflektiertem IR-Licht in mindestens zwei unterschiedlichen IR-Wellenlängenbereichen,
einer Weißlicht-Emissionseinheit (20) und einer Farbdetektionseinheit (22),
einer Steuereinheit (14), die ausgebildet ist zum Ansteuern der Weißlicht-Emissionseinheit (20) zum Emittieren von Weißlicht und Bestimmen einer Farbe des Kunststoffobjekts basierend auf einer Detektion durch die Farbdetektionseinheit (22), sowie zum Bestimmen eines Typs des Kunststoffobjekts, der das verwendete Kunststoffmaterial angibt, durch Vergleichen mindestens der detektierten IR-Intensitäten und von der Farbe des Kunststoffobjekts abgeleiteten Farbwerten mit einer Mehrzahl von Referenzgrößen, die jeweils unterschiedlichen Typen von Kunststoffobjekten zugeordnet sind, und Bestimmen der Referenzgröße mit der größten Übereinstimmung und
einer Sortiereinheit (104) zum Sortieren des Kunststoffobjekts nach seinem Typ,
bei der die Steuereinheit (14) zum Bestimmen eines Verwendungszwecks des Kunststoffobjekts anhand des Vorhandenseins oder Fehlens eines oder mehrerer Marker, die einem bestimmten Verwendungszweck zugeordnet sind und eine Fluoreszenz im sichtbaren Bereich oder im IR-Bereich aufweisen, wobei das Vorhandensein des einen oder der mehreren Marker durch Erfassen einer Abklingzeit der Lumineszenz derselben detektiert wird, und Ansteuern der Sortiereinheit (104) zum Sortieren des Kunststoffobjekts nach seinem Verwendungszweck ausgebildet ist.

11. Vorrichtung nach Anspruch 10, bei der

die Steuereinheit (14) dazu ausgebildet ist, die IR-Sendeeinheit (10) zum zeitlich aufeinanderfolgenden Aussenden des IR-Lichts in den mindestens zwei unterschiedlichen IR-Wellenlängenbereichen anzusteuern, wobei die IR-Sendeeinheit (10) beispielsweise mehrere unterschiedliche IR-LED (301-308) aufweist, beispielsweise drei oder mehr, insbesondere 8, die jeweils Licht in den unterschiedlichen IR-Wellenlängenbereichen aussenden, wobei für jeden IR-Wellenlängenbereich mehrere, beispielsweise 3, IR- LED (301-308) vorgesehen sind, die in einer Umfangsrichtung um ein Zentrum der IR-Sendeeinheit (10) in regelmäßigen Intervallen angeordnet sind.

12. Vorrichtung nach einem der Ansprüche 10 bis 11, bei der die Detektionseinheit (12) eine oder mehrere parallel geschaltete breitbandige IR-Fotodioden (310) aufweist, die zum Detektieren des reflektierten IR-Lichts in den mindestens zwei unterschiedlichen IR-Wellenlängenbereichen ausgebildet sind.

13. Vorrichtung nach Anspruch 11 und 12, bei der die IR-LED (301-308) und die IR-Fotodioden (310) in einer Sende-/Empfangseinheit (102) integriert sind, wobei die IR-Fotodioden im Zentrum der IR-Sendeeinheit angeordnet sind, beispielsweise als im Wesentlichen sternförmig angeordnete Reihen von IR-Fotodioden (310), oder in mehreren Reihen angeordnet sind, entlang derer bzw. zwischen denen die IR-LED (301-308) vorgesehen sind.

14. Vorrichtung nach Anspruch 12 oder 13, bei der die mehreren IR-Fotodioden (310) in mehrere, beispielsweise unterschiedliche Abstände zum Zentrum der IR-Sendeeinheit (10) aufweisende Gruppen von IR-Fotodioden unterteilt sind.

15. Vorrichtung nach einem der Ansprüche 13 bis 14, bei der die Sende-/Empfangseinheit (102) ferner eine UV-Sendeeinheit (30) aufweist,

bei der die Steuereinheit (14) dazu ausgebildet ist, die UV-Sendeeinheit (30) zum Aussenden von UV-Licht in Richtung des Kunststoffobjekts anzusteuern und ansprechend darauf ein Fluoreszenzverhalten im sichtbaren Bereich zu bestimmen, und

bei der die Steuereinheit (14) ferner dazu ausgebildet ist, anhand des Fluoreszenzverhaltens einen IR-Detektionsbereich (202) an dem Kunststoffobjekt zu bestimmen.

**Claims**

1. A method for sorting plastic objects (200), in particular as part of a recycling process, comprising

emitting IR light towards one of the plastic objects, detecting IR intensities IR1, ... IRn of IR light reflected by the plastic object in at least two different IR wavelength ranges, determining a color of the plastic object, determining a type of the plastic object indicating the plastic material used by comparing at least the detected IR intensities and color values derived from the color of the plastic object to a plurality of reference quantities respectively associated with different types of plastic objects and determining the reference quantity being the closest match, sorting the plastic object in accordance with its type, determining an intended use of the plastic object by detecting the presence or absence of one or more markers associated with a predetermined intended use and having a luminescence in the visible range or the IR range, wherein the presence of the one or more markers is detected by acquiring a decay time of the luminescence of the same, and sorting the plastic object in accordance with its intended use.

2. The method of claim 1, wherein the IR light in the at least two different IR wavelength ranges is emitted temporally in sequence, for example, by different IR LED (301-308).

3. The method of claim 1 or 2, wherein the detection is performed by means of a broadband IR detection unit (12), for example, one or more IR photodiodes (310) connected in parallel.

4. The method of claim 1, further comprising

emitting the IR light in the at least two different IR wavelength ranges using a broadband IR light source, and detecting the IR intensities by different IR detection units respectively associated with the at least two IR wavelength ranges, for example, IR photodiodes.

5. The method of one of claims 1 to 4, wherein normalized intensities ir1, ..., irn and a normalization factor B are determined from the detected intensities, fulfilling the relations:

$$Ir1 = IR1/(IR1 + \ldots + IRn)$$

$$\ldots$$

$$Irn = IRn/(IR1 + \ldots + IRn)$$

$$B = IR1 + \ldots + IRn$$

and wherein the type of the plastic object is determined by comparing a combination of the normalized IR intensities and the normalization factor to the plurality of reference quantities.

6. The method of one of claims 1 to 5, wherein the at least two IR wavelength ranges are in the range between 1000 nm and 2200 nm, in particular 1000 nm to 1700 nm.

7. The method of one of claims 1 to 6, wherein at least three, preferably more than three, in particular 8, different IR wavelength ranges are used.

8. The method of one of claims 1 to 7, further comprising

    emitting UV light towards the plastic object, and determining an IR detection region (202) on the plastic object from a fluorescence behaviour of different regions of the plastic object in the visible range,
    preferably, wherein a region, in which an intensity of a fluorescence in the visible range, for example, in the blue wavelength range, is below a predetermined threshold value, is determined as the IR detection region (202).

9. The method of one of claims 1 to 8, wherein the type of the plastic object indicates the plastic material used in combination with a color of the same, preferably, wherein the type of the plastic material further indicates whether a sorting based on the plastic material used and/or the color is to be performed.

10. An apparatus (100) for sorting plastic objects (200), in particular as part of a recycling process, comprising

    an IR emission unit for emitting IR light towards one of the plastic objects (200),
    an IR detection unit (12) for detecting IR intensities IR1, ..., IRn of IR light reflected by the plastic object in at least two different IR wavelength ranges,
a white light emission unit (20) and a color detection unit (22),
a control unit (14) configured to control the white light emission unit (20) to emit white light and determine a color of the plastic object based on a detection by the color detection unit (22), and to determine a type of the plastic object indicating the plastic material used by comparing at least the detected IR intensities and color values derived from the color of the plastic object to a plurality of reference quantities respectively associated with different types of plastic objects and determining the reference quantity being the closest match, and
a sorting unit (104) for sorting the plastic object in accordance with its type,
wherein the control unit (14) is configured to determine an intended use of the plastic object from the presence or absence of one or more markers associated with a predetermined intended use and having a fluorescence in the visible range or the IR range, wherein the presence of the one or more markers is detected by acquiring a decay time of the luminescence of the same, and control the sorting unit (104) for sorting the plastic object in accordance with its intended use.

11. The apparatus of claim 10, wherein

    the control unit (14) is configured to control the IR emission unit (10) to emit the IR light in the at least two different IR wavelength ranges temporally in sequence,
    wherein the IR emission unit (10) includes, for example, a plurality of different IR LED (301-308), for example, three or more, in particular 8, respectively emitting light in the different IR wavelength ranges,
    wherein, for each IR wavelength range, a plurality of, for example 3, IR LED (301-308) are provided, which are arranged at regular intervals in a circumferential direction around a center of the IR emission unit (10).

12. The apparatus of one of claims 10 to 11, wherein the detection unit (12) includes one or more broadband IR photodiodes (310) connected in parallel and configured to detect the reflected IR light in the at least two different IR wavelength ranges.

13. The apparatus of claim 11 and 12, wherein the IR LED (301-308) and the IR photodiodes (310) are integrated in an emission/reception unit (102), wherein the IR photodiodes are arranged in the center of the IR emission unit, for example, as substantially star-shaped rows of IR photodiodes (310), or in a plurality of rows, along which or between which the IR LED (301-308) are provided.

14. The apparatus of claim 12 or 13, wherein the plurality of IR photodiodes (310) are divided into several groups of IR photodiodes, for example, having different distances to the center of the IR emission unit (10).

15. The apparatus of one of claims 13 to 14, wherein the emission/reception unit (102) further includes a UV emission unit (30),

wherein the control unit (14) is configured to control the UV emission unit (30) to emit UV light towards the plastic object and, in response thereto, determine a fluorescence behaviour in the visible range, and
wherein the control unit (14) is further configured to determine an IR detection region (202) on the plastic object from the fluorescence behaviour.

**Revendications**

1. Procédé de tri d'objets (200) en plastique, notamment dans le cadre d'un processus de recyclage, comprenant

l'émission d'une lumière IR vers l'un des objets en plastique,
détection des intensités IR IR1, ..., IRn de la lumière IR réfléchie sur l'objet en plastique dans au moins deux plages de longueurs d'onde IR différentes,
détermination d'une couleur de l'objet en plastique,
détermination d'un type de l'objet en plastique, qui indique le matériau plastique utilisé, en comparant au moins les intensités IR détectées et les valeurs de couleur dérivées de la couleur de l'objet en plastique avec une pluralité de valeurs de référence, chacune associée à différents types de plastique objets, et détermination de la valeur de référence avec la plus grande concordance,
tri de l'objet en plastique selon son type,
détermination d'une utilisation prévue de l'objet en plastique en détectant la présence ou de l'absence d'un ou plusieurs marqueurs qui sont associés à une utilisation prévue spécifique et qui présentent une luminescence dans le domaine visible ou dans le domaine IR, la présence de l'un ou plusieurs marqueurs étant détectée par détection d'un temps de décroissance de la luminescence de celle-ci, et
tri de l'objet en plastique selon son utilisation prévue.

2. Procédé selon la revendication 1, dans lequel la lumière IR est émise successivement dans le temps dans les au moins deux plages de longueurs d'onde IR différentes, par exemple par différentes LED IR (301-308).

3. Procédé selon la revendication 1 ou 2, dans lequel la détection s'effectue à l'aide d'une unité de détection IR à large bande (12), par exemple une ou plusieurs photodiodes IR (310) connectées en parallèle.

4. Procédé selon la revendication 1, comprenant en outre
l'émission de la lumière IR dans les au moins deux plages de longueurs d'onde IR différentes à l'aide d'une source de lumière IR à large bande et la détection des intensités IR à l'aide de différentes unités de détection IR, par exemple des photodiodes IR, chacune étant associée aux au moins deux plages de longueurs d'onde IR.

5. Procédé selon l'une des revendications 1 à 4, dans lequel des intensités standardisées ir1, ..., irn et un facteur de normalisation B sont déterminés à partir des intensités détectées, données par :

$$ir1 = IR1/(IR1 + \ldots + IRn)$$
$$\ldots$$
$$irn = IRn/(IR1 + \ldots + IRn)$$
$$B = IR1 + \ldots + IRn$$

et
dans lequel le type de l'objet en plastique est déterminé en comparant une combinaison des intensités IR normalisées et du facteur de normalisation avec la pluralité de valeurs de référence.

6. Procédé selon l'une des revendications 1 à 5, dans lequel les au moins deux plages de longueurs d'onde IR se situent dans la plage comprise entre 1000 nm et 2200 nm, notamment de 1000 nm à 1700 nm.

7. Procédé selon l'une des revendications 1 à 6, dans lequel on utilise au moins trois, de préférence plus de trois, en particulier 8 plages de longueurs d'onde IR différentes.

8. Procédé selon l'une des revendications 1 à 7, comprenant en outre

l'émission d'une lumière UV vers l'objet en plastique et
détermination d'une zone de détection IR (202) sur l'objet en plastique sur la base d'un comportement de fluorescence de différentes zones de l'objet en plastique dans le domaine visible, dans lequel une zone où une intensité de fluorescence dans le domaine visible, par exemple dans le plage de longueur d'onde bleu, est inférieure à une valeur seuil prédéterminée, est déterminée comme étant la zone de détection IR (202).

9. Procédé selon l'une des revendications 1 à 8, dans lequel le type de l'objet en plastique indique la matière plastique utilisée en association avec une couleur de celui-ci, dans lequel de préférence le type de matière plastique indique en outre si un tri doit avoir lieu selon la matière plastique utilisée et/ou selon la couleur.

10. Dispositif (100) de tri d'objets (200) en plastique, notamment dans le cadre d'un processus de recyclage, comprenant

une unité émettrice IR (10) pour émettre une lumière IR vers l'un des objets (200) en plastique,
une unité de détection IR (12) pour détecter des intensités IR IR1, ..., IRn de la lumière IR réfléchie sur l'objet en plastique dans au moins deux plages de longueurs d'onde IR différentes,
une unité d'émission de lumière blanche (20) et une unité de détection de couleur (22),
une unité de commande (14) qui est conçue pour commander à l'unité d'émission de lumière blanche (20) d'émettre une lumière blanche et pour déterminer une couleur de l'objet en plastique sur la base d'une détection par l'unité de détection de couleur (22), et pour déterminer un type de l'objet en plastique, qui indique le matériau plastique utilisé, en comparant au moins les intensités IR détectées et les valeurs de couleur dérivées de la couleur de l'objet en plastique avec une pluralité de valeurs de référence, chacune associée à différents types de plastique objets, et pour déterminer la valeur de référence avec la plus grande concordance et
une unité de tri (104) pour trier l'objet en plastique selon son type,
dans lequel l'unité de commande (14) est conçue pour déterminer une utilisation prévue de l'objet en plastique sur la base de la présence ou de l'absence d'un ou plusieurs marqueurs qui sont associés à une utilisation prévue spécifique, et qui présentent une fluorescence dans le domaine visible ou dans le domaine IR, la présence de l'un ou plusieurs marqueurs étant détectée par détection d'un temps de décroissance de la luminescence de celle-ci, et pour commander à l'unité de tri (104) de trier l'objet en plastique selon son utilisation prévue.

11. Dispositif selon la revendication 10, dans lequel

l'unité de commande (14) est conçue pour commander à l'unité émettrice IR (10) d'émettre la lumière IR successivement dans le temps dans les au moins deux plages de longueurs d'onde IR différentes,
dans lequel l'unité émettrice IR (10) comporte, par exemple, plusieurs LED IR (301-308) différentes, par exemple trois ou plus, en particulier 8, dont chacune émet de la lumière dans les différentes plages de longueurs d'onde IR,
dans lequel, pour chaque plage de longueur d'onde IR, plusieurs LED IR (301-308) sont prévues, par exemple 3, disposées à intervalles réguliers dans une direction circonférentielle autour d'un centre de l'unité émettrice IR (10).

12. Dispositif selon l'une des revendications 10 à 11, dans lequel l'unité de détection (12) comporte une ou plusieurs photodiodes IR (310) à large bande connectées en parallèle, qui sont conçues pour détecter la lumière IR réfléchie dans les au moins deux plages de longueurs d'onde IR différentes.

13. Dispositif selon la revendication 11 et 12, dans lequel la LED IR (301-308) et les photodiodes IR (310) sont intégrées dans une unité émettrice/réceptrice (102), les photodiodes IR étant disposées au centre de l'unité émettrice IR, par exemple sous forme de rangées de photodiodes IR (310) essentiellement en forme d'étoile, ou disposées en plusieurs rangées, le long desquelles ou entre lesquelles les LED IR (301-308) sont disposées.

14. Dispositif selon la revendication 12 ou 13, dans lequel la pluralité de photodiodes IR (310) est divisée en plusieurs groupes de photodiodes IR, par exemple ayant des distances différentes du centre de l'unité émettrice IR (10).

15. Dispositif selon l'une des revendications 13 à 14, dans lequel l'unité émettrice/réceptrice (102) comporte en outre une unité d'émission UV (30),

dans lequel l'unité de commande (14) est conçue pour commander à l'unité d'émission UV (30) d'émettre une lumière UV vers l'objet en plastique et pour déterminer, en réponse, un comportement de fluorescence dans le domaine visible, et
dans lequel l'unité de commande (14) est conçue en outre pour déterminer une zone de détection IR (202) sur l'objet en plastique sur la base du comportement de fluorescence.

## FIG 1

PVC | PET | PS | PP | PET

102

104

100

200

PP
PP
PP

## FIG 2

102

10  20  12  22  30

14

204  202

200

FIG 3

FIG 4

## FIG 5

## FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060081510 A1
- US 20100290032 A1
- US 6433338 B1
- DE 10049404 A1
- US 7175086 B2
- WO 2019180438 A2
- CN 107703094 A
- DE 19949656 A1
- WO 2017220079 A1
- DE 4231477 A1